# EUROPEAN PATENT APPLICATION

(11) **EP 2 465 904 A1**
(43) Date of publication of application: **20.06.2012**
(21) Application number: 10195926.0
(22) Date of filing: 20.12.2010
(51) Int. Cl.: C09C 1/48

(54) **A method and apparatus for manufacturing of carbon black/mineral filler from scrap tires and a carbon black/mineral filler**

(71) Applicant: Eco Logic Sp. z o.o., 00-695 Warszawa (PL)
(72) Inventor: Soroka, Piotr, 15-806 Bialystok (PL)
(74) Representative: Pawlowski, Adam

(57) **Abstract**

A method for manufacturing of carbon black/mineral filler from scrap tires involving pyrolysis of shredded scrap tires, the method comprising the steps of obtaining a carbon product by pyrolyzing the shredded scrap tires with the presence of a catalyst in a pyrolysis reactor, the reactor heated to a temperature 350-440°C by a heating jacket, inside of which flows a mix of hot exhaust gases of the reactor heating furnace and cooled exhaust gases of the heating jacket; separating, in a magnetic separator, steel cord from the carbon product to obtain a refined carbon product; in a grinding apparatus, grinding in an impact mill the refined carbon product; and separating, using a cyclone separator, particles having a size from 1µm to 50µm from the ground carbon product to obtain a carbon black/mineral filler.

## Description

The object of the invention is a method and apparatus for manufacturing of carbon black/mineral filler from scrap tires as well as a carbon black/mineral filler.

The term "carbon black/mineral filler" as used throughout the description shall mean a filler comprising carbon black and mineral components.

Recycling of large volumes of scrap tires is a major environmental issue. One of the methods of tire recycling is pyrolysis, which produces gas, liquid fuel and carbon residue that after further processing may be converted into carbon black/mineral filler for use in rubber industry.

Processes known to date are economically ineffective, especially with respect to processing costs and end product quality. In particular, pyrolytic carbon black obtained from scrap tires by the known methods does not have parameters that would make it suitable for use as fillers for rubber mixes.

For example, a PCT application WO02057390 discloses a method for manufacturing carbon black from rubber waste wherein the pyrolysis is performed at temperature over 500°C and the obtained carbonised material is subject to magnetic fragmentation in order to obtain carbon powder, which is characterised by dispergated particles size distribution in water of at least 75% by powder particles volume that have a size of less than 10 microns. Hence the solution is characterised by high pyrolysis temperature and requirement of fragmentation of the carbonised material to very small sizes.

In addition, the known pyrolytic carbon blacks, used as fillers for rubber mixes, do not allow for obtaining satisfactory tensile strength (Rr) comparable to strength obtained by using typical furnace carbon blacks.

The aim of the present invention is to provide a method and an apparatus for manufacturing carbon black/mineral filler involving pyrolysis of scrap tires, which is economically effective and allows obtaining carbon black/mineral filler that when used in rubber mixes allows for creation of mixes having high tensile strength, comparable to strength obtained by adding traditional highly-active furnace carbon blacks produced from fossil materials.

The object of the invention is a method for manufacturing of carbon black/mineral filler from scrap tires involving pyrolysis of shredded scrap tires, the method comprising the steps of obtaining a carbon product by pyrolyzing the shredded scrap tires with the presence of a catalyst in a pyrolysis reactor, the reactor heated to a temperature 350-440°C by a heating jacket, inside of which flows a mix of hot exhaust gases of the reactor heating furnace and cooled exhaust gases of the heating jacket; separating, in a magnetic separator, steel cord from the carbon product to obtain a refined carbon product; in a grinding apparatus, grinding in an impact mill the refined carbon product; and separating, using a cyclone separator, particles having a size from 1µm to 50µm from the ground carbon product to obtain a carbon black/mineral filler.

Preferably, the catalyst is calcium carbonate (3%) with an additive of 10 percentage by weight of A-4 Zeolite in a proportion of 0,3 percentage by weight with respect to the weight of shredded tires.

Preferably, the reactor heating furnace is fired by post-pyrolysis gas and/or post-pyrolysis oil.

Another object of the invention is an apparatus for manufacturing carbon black/mineral filler from scrap tires, comprising a pyrolysis reactor for performing pyrolysis of scrap tires in order to obtain a carbon product, the apparatus characterized in that the pyrolysis reactor comprises a heating jacket for heating the pyrolysis reactor to a temperature of 350-440°C by a mix of hot exhaust gas from the reactor heating furnace and exhaust gas of the heating jacket; wherein the apparatus further comprises a magnetic separator for separating steel cord from the carbon product to obtain a refined carbon product; a grinding apparatus comprising an impact mill for grinding the refined carbon product ; and a cyclone separator having a bag filter, for separating the ground carbon product particles in order to obtain a carbon black/mineral filler having a size from 1µm to 50µm.

Preferably, the furnace heating the reactor is fired by a post-pyrolytic gas and/or by post-pyrolytic oil.

Another object of the present invention is a carbon black/mineral filler made by the method of the present invention, characterized in that it comprises 72 to 77 % by weight of carbon and 18 to 23 % by weight of mineral components and wherein the particles of the carbon black/mineral filler have a size from 1µm to 50µm.

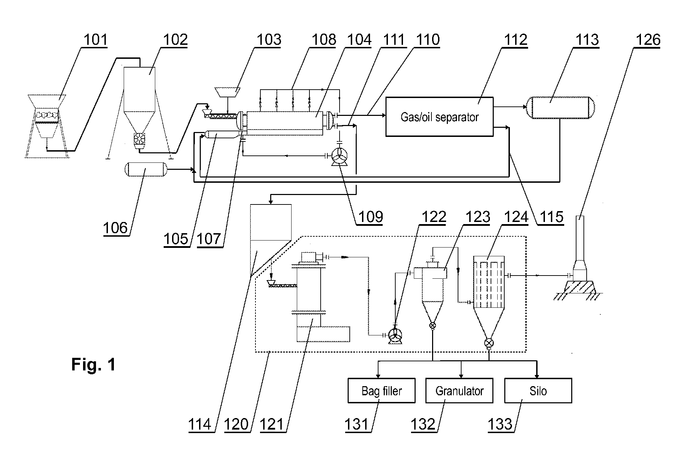

The invention is shown by way of an exemplary embodiment on a drawing, in which Fig. 1 presents a diagram of an apparatus for manufacturing carbon black/mineral filler by means of a method according to the invention.

Fig. 1 presents a diagram of an apparatus for manufacturing carbon black/mineral filler by means of a method according to the invention. A shredder 101 receives scrap tires and shreds them into smaller blocks, for example 50x50mm. The shreds are fed to a shreds container 102. Use of the shreds container 102 allows for shortening of the shredder duty cycle 101. For example, the shredder may operate in an 8 hour duty cycle while the remaining parts of the apparatus may operate in a 24 duty cycle. The shreds from the shreds container 102 are fed to a pyrolysis reactor 104. Additionally, from a catalyst container 103, a sulfur transfer catalyst is supplied to the reactor, for example calcium carbonate (3%) with an additive of 10 percentage by weight of A-4 Zeolite in a proportion of 0,3 percentage by weight with respect to the weight of shredded tires supplied to the reactor within 3 hours, whereas supply to the reactor is performed at 3 hour intervals.

As a result of the pyrolysis, in the presence of the catalyst, a process of hydrocarbon chains decomposition and condensation takes place, breaking of sulfur bridges and hence decomposition of rubber to flammable pyrolytic gasses (such as methane, ethane, propane, butane, ethylene, propane butane, CO, CO₂, butadiene, sulfur compounds), post-pyrolysis oils (such as aromatic compounds, alkanes, alkenes, ketones, aldehydes) and post-pyrolytic carbon black (carbon product) comprising mineral compounds. The presence of mineral compounds in the post-pyrolytic carbon black results from the composition of the input raw material, that is scrap tires, and unreacted catalyst. Tires are made of rubber, carbon black and softeners, which after pyrolysis decompose to the above-mentioned pyrolysis products, and additionally comprise zinc oxide, silica and minute quantities of other metals.

The liquid products 110 of the pyrolysis are processed in a processing apparatus 112 comprising a separator of gas and oil. Separated oil is directed to oil storage containers 113 and gas 115 is directed to a gas-oil furnace 105 heating the pyrolysis reactor 104 in order to improve the economic efficiency of the process. In order to further improve the economic efficiency of the process, the furnace 105 may also be supplied with gas 113 which is a product of the pyrolysis process.

The pyrolysis reactor 104 is a horizontal container, heated with exhaust gasses from the gas-oil furnace 105 in order to keep a constant temperature, preferably in the range of 350-440°C. Processing at this temperature has an advantage that the remaining carbon is not agglomerated and hydrogen fraction cyclysation is not present, which allows for obtaining a high quality fuel component and carbon black/mineral filler.

In order to achieve a constant distribution of heat, the hot exhaust gas 107 is mixed, at exit of the gas-oil furnace 105, with partially cooled exhaust 108 from exit of the heating jacket, the flow of which is controlled by an exhaust blower 109. The distribution of heat facilitates equal end product properties. Some of the exhaust not used for heating is purified and released to atmosphere. As mentioned above, the gas-oil furnace is fired by oil from the oil storage container 106 (may be supplied with oil obtained during pyrolysis) and gas generated in a processing apparatus 112. Owing to this external energy requirements are highly reduced for the pyrolysis process and the process is almost self-running due to energy obtained from scrap tires.

The carbon product 111 from the pyrolysis reactor 104 is fed to a magnetic separator 114 where a steel cord is separated, that is a part of scrap tires not processed during the pyrolysis. The carbon product cleared from metal content is directed to a grinding installation 120, which includes an impact mill 121, a separating cyclone 123 for separating the carbon product, and a bag filter 124. Small particles of the impact-mill-grinded material are transmitted in an air stream flow controlled by a blower 122 into a cyclone 123 for separating the product and are fed to a bag filter 124. Purified air is exhaust from the bag filter 124 via a blow out column 126. Refined carbon product can subsequently be packed, as a carbon black/mineral filler obtained according to the method of the invention.

The use of a carbon black refining apparatus greatly improves properties of the carbon product obtained in the reactor 104. The filler according to the invention is characterized by high fragmentation. Preferably, the carbon product refining apparatus is adapted, by an impact mill 121 configuration, for obtaining a carbon black/mineral filler having particles size from 1µm to 50µm. The higher fragmentation of the carbon product, the higher the specific surface and hence activity. Improvement of activity by fragmentation results in obtaining carbon black/mineral filler activity comparable to active furnace carbon black.

In addition, during the process of grinding of the carbon product, the concentration of carbon is increased and concentration of mineral compounds (ashes), which are held in a classifier, is reduced. Use of a catalyst has the advantage that it stays in the filler after fragmentation and prevents aggregation of carbon particles as in typical furnace carbon blacks. This allows obtaining carbon black/mineral filler having particles of a size equal to that obtained in the fragmentation process. Such filler mixes well in rubber mixes and provides, after vulcanisation, their advantageous physical properties, for example high tensile strength.

The table below presents a comparison of parameters of carbon black/mineral filler according to the invention, for example S1 having particle size 5µm (2500 mesh) and S2 having particle size 45µm (350 mesh), with a standard furnace carbon black N-550.

| | N-550 | S1 | S2 | Measurement method |
|---|---|---|---|---|
| Drying loss at 125°C, mass % | 0,9 | 0,6 | 0,6 | ASTM D 1509-95 met. A |
| Dibutyl phthalate absorption value | 121 | 57,7 | 59,6 | BN-79/6048-02 met. Manual |
| Iodine value | 43 | 13,7 | 22,4 | ASTM D 1510-03 |
| Specific surface | 42 | 42,7 | 36,4 | ISO 5794-1 Annex D met. "one point" |

| | | | | |
|---|---|---|---|---|
| pH | 7,8 | 8,2 | 8,7 | ASTM D 1512-95 met. A |
| Bulk density | 380 | 133,4 | 256,4 | ASTM D 1513-99 |
| Acetone extract, mass % | 0.1 | 3,1 | 2,8 | BN-79/6048-02.08 |
| Carbon compounds (carbon black), mass % | 99,6 | 77,7 | 72,3 | |
| Ash amount at 550 °C, mass % | 0.45 | 18,8 | 22,8 | ASTM D 1506-99 |
| Ash analysis, mass %, | | | | QPB.34/BLC, issue.5 dated30.07.2008: |
| SiO₂ | | 0,7 | 2,5 | PN-91/C-04202 |
| ZnO | | 2,8 | 2,6 | PN-81/C-04241 p. 2.5 |
| Al₂O₃ | | 1,0 | 1,9 | PN-H-04155:2008 p.17.3 |
| CaO with relation to CaCO₃ | | 5,7 10,1 | 7,2 12,8 | PN-EN ISO 21587-2:2007 p.8 |
| MgO | | 1,9 | 2,4 | PN-EN ISO 21587-2:2007 p.9 |
| TiO₂ | | 0,1 | 0,1 | PN-EN ISO 21587-2:2007 p. 6.3 |
| Fe₂O₃ | | 0,3 | 0,5 | PN-H-04155:2008 p.16.1 |

The furnace carbon black N-550 ash has not been analyzed due to its low content.

The carbon black obtained by the method according to the invention turns out to be an exceptional filler for rubber mixes for styrene-butadiene-rubber (SBR). The carbon black/mineral filler according to the invention has improved tensile strength when compared to N-770 or N-550 furnace carbon blacks, as shown in the table below:

| | N-770 | N-550 | S1 | S2 | Measurement method |
|---|---|---|---|---|---|
| Vulcanisation150⁰x 15 min | | | | | |
| Hardness,Sh A | 58 | 64 | 55 | 56 | PN-80/C-04238 |
| Rr,MPa | 13,4 | 15,2 | 24,8 | 19,6 | PN-ISO 37:2007 |

It is to be noted that exceptional mix properties were achieved for carbon black/mineral filler, according to the invention, having relatively high particle size in the range of 1-50µm.

## Claims

1. A method for manufacturing of carbon black/mineral filler from scrap tires involving pyrolysis of shredded scrap tires, the method comprising the steps of:
- obtaining a carbon product by pyrolyzing the shredded scrap tires with the presence of a catalyst in a pyrolysis reactor, the reactor heated to a temperature 350-440°C by a heating jacket, inside of which flows a mix of hot exhaust gases of the reactor heating furnace and cooled exhaust gases of the heating jacket;
- separating, in a magnetic separator, steel cord from the carbon product to obtain a refined carbon product;
- in a grinding apparatus, grinding in an impact mill the refined carbon product; and
- separating, using a cyclone separator, particles having a size from 1µm to 50µm from the ground carbon product to obtain a carbon black/mineral filler.

2. The method according to claim 1 **characterised in that** the catalyst is calcium carbonate (3%) with an additive of 10 percentage by weight of A-4 Zeolite in a proportion of 0,3 percentage by weight with respect to the weight of shredded tires.

3. The method according to claim 1 **characterised in that** the reactor heating furnace is fired by post-pyrolysis gas.

4. The method according to claim 1 **characterised in that** the reactor heating furnace is fired by a post-pyrolysis oil.

5. An apparatus for manufacturing carbon black/mineral filler from scrap tires, comprising a pyrolysis reactor for performing pyrolysis of scrap tires in order to obtain a carbon product, the apparatus **characterized in that**
- the pyrolysis reactor (104) comprises a heating jacket for heating the pyrolysis reactor to a temperature of 350-440°C by a mix of hot exhaust gas (107) from the reactor heating furnace (105) and exhaust (108) gas of the heating jacket;
- wherein the apparatus further comprises
- a magnetic separator (114) for separating steel cord from the carbon product to obtain a refined carbon product;
- a grinding apparatus (120) comprising an impact mill (121) for grinding the refined carbon product ; and
- a cyclone separator (123) having a bag filter (124), for separating the ground carbon product particles in order to obtain a carbon black/mineral filler having a size from 1µm to 50µm.

6. The apparatus according to claim 5 **characterised in that** the furnace (105) heating the reactor (104) is fired by a post-pyrolytic gas (115).

7. The apparatus according to claim 5 **characterised in that** the furnace (105) heating the reactor (104) is fired by a post-pyrolytic oil (113).

8. A carbon black/mineral filler made by the method of claim 1, **characterized in that** it comprises 72 to 77 % by weight of carbon and 18 to 23 % by weight of mineral components and wherein the particles of the carbon black/mineral filler have a size from 1µm to 50µm.
